# EUROPEAN PATENT SPECIFICATION

(11) **EP 1 028 596 B1**
(45) Date of publication and mention of the grant of the patent: **22.06.2011**
(21) Application number: 00300738.2
(22) Date of filing: 31.01.2000
(51) Int. Cl.: H04W 4/02, H04W 4/18

(54) **System and method for provision of travel instructions to informational appliances**
System und Verfahren zur Bereitstellung von Fahrtroutendaten an Informationsgeräten
Système et procédé de fourniture d'instructions de voyage vers appareils informatiques

(30) Priority: 10.02.1999 US 248077
(43) Date of publication of application: 16.08.2000
(73) Proprietor: LUCENT TECHNOLOGIES INC., Murray Hill, NJ 07974-0636 (US)
(72) Inventor: Ladd, David J., Atherton, California 94027 (US)
(74) Representative: Williams, David John

(56) References cited:
- WO-A-97/07467
- WO-A-98/59506
- US-A- 5 418 835
- US-A- 5 543 789

## Description

### Field of Invention

The present invention relates to a system and method for delivering requested information, such as driving directions, to a user's wireless informational device or voice mailbox.

### Background of the Invention

An individual often needs information at times when it is difficult or impossible to access or when the individual is not in a position to record the information. For example, a driver in his car may become lost and need driving directions, or be travelling in an unfamiliar area. Many paper maps do not have sufficient detail for point-to-point navigation. Further, even if the driver contacts a person with the needed directions, the driver would have to record such directions manually or rely on his own memory, either of which can be difficult when the directions are complex. In addition, there is no assurance that the directions are accurate.

U.S. Patent No. 5,543,789 discloses a system for providing travel directions from a base unit to a mobile remote unit. A person desiring travel directions uses a "data entry" aspect of a mobile unit to enter addresses. The data is sent to the base unit, and the base unit formulates travel directions or a graphical map, and sends the travel directions to the mobile unit.

Accordingly, it would be beneficial to provide a system and method for delivering accurate driving directions to a user's pager or Personal Communication System ("PCS") digital phone messenger or voice mail system upon request of the user.

### Summary of the Invention

In accordance with the present invention there is provided a method for communicating with a voice mailbox according to claim 1. Also in accordance with the present invention there is provided a system for communicating with a voice mailbox according to claim 17.

In accordance with one embodiment of the present invention, a network-based system is provided to accept navigational endpoints defining the start and end locations for the desired directions as well as accepting pager or voice mail identifying information. The system accesses a mapping database to obtain the desired directions, and then either sends the directions to the user's pager or PCS digital messenger or processes the text based directions using a text-to-voice processor and sends the audio output to the user's voice mailbox.

Additional features and advantages of the invention will be set forth in the description that follows. It is to be understood that the foregoing general description and the following detailed description are exemplary and explanatory and are intended to provide explanation of the preferred embodiments of the invention defined in the appended claims.

### Brief Description Of The Drawings

The accompanying drawings, which are incorporated in and constitute a part of this specification, illustrate embodiments of the invention and, together with the following detailed description, serve to explain the objectives, advantages, and principles of the invention.
FIG 1 is a diagram illustrating one embodiment of the invention in which the desired information is to be sent to a wireless pager;
FIG. 2 is an illustration of an information request page for receiving a user's information request;
FIG. 3 is a flowchart illustrating a method by which one embodiment of the system accepts and processes requests for information; and
FIG. 4 is a diagram illustrating an alternate embodiment of the system wherein the informational device to which the desired information is to be sent to a user's voice mailbox.

### Detailed Description Of The Preferred Embodiment

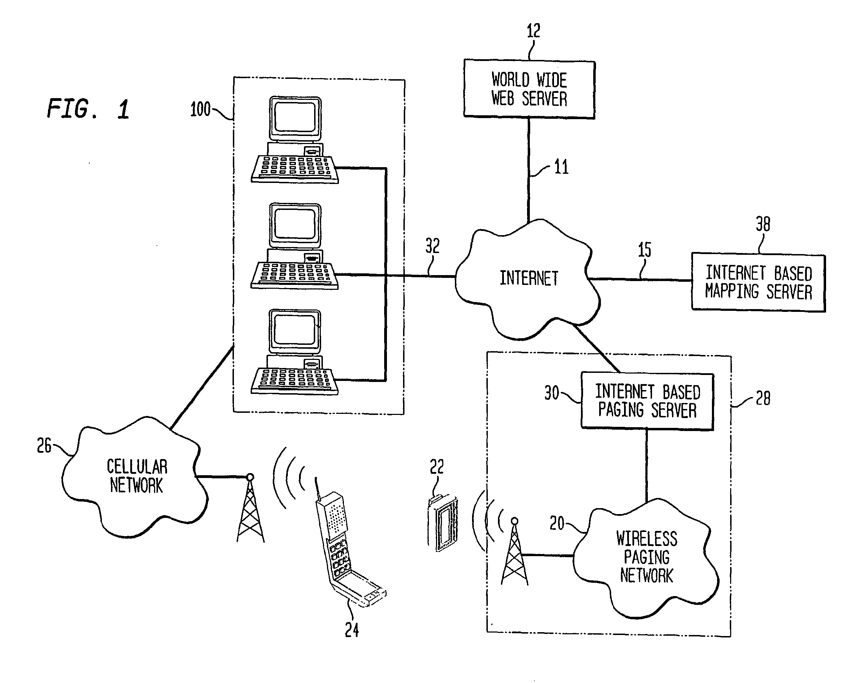

Turning to Figure 1, a system is shown which allows a subscriber to a paging service 28 to request text based driving directions, which directions are subsequently transmitted and downloaded to his pager 22. In this embodiment, a user requiring directions places a voice call, for example via a cellular phone 24, to a call center 100 The user conveys the starting location and final destination for which directions are required to a call taker and also conveys the identification of the user's paging service 20 or PCS digital phone service and the user's pager ID 22. The call taker subsequently enters this information into an Internet-based system, which generates text formatted directions. The directions are then automatically sent to a network gateway 30 into the user's paging system 28.

The call center 100 is preferably configured to simultaneously accept and distribute multiple voice calls originating from multiple users over a wireless cellular network. In one embodiment, voice-recognition technology or other types of automated systems are used to accept information from the caller. Alternatively, call takers stationed at a plurality of Internet based terminals 10 manually process incoming calls. When a call is received, the call taker accesses an information request screen (discussed below) via the call taker's terminal 10. The request screen is preferably in the form of an HTML document on a web site accessible locally through an Intranet or LAN or remotely through the Internet. Internet accessibility advantageously allows data to be entered from remote locations, and allows callers to enter their own information, if desired.

The web site, which is accessed by the call taker by a network connection, such as an Internet connection 32, is stored on a conventional server 12 running appropriate software, for example, on a Compaq Proliant 6000 hardware platform running Microsoft's Widows NT Server software. Operating system software, such as NT Server, contains preprogrammed software applications by which a server 12 can host an Internet or Intranet web site. Microsoft's Internet Server 4.0 is one such application The method of configuring a web site is well known in the art.

Alternately, the paging system can be accessed via dedicated data lines In such an embodiment, the service provider prearranges with each one or more paging service providers for direct access into the service provider's server or router. A dedicated data line, such as a 56Kbps or T-1 line, is used to connect the server 12 to the paging service's server or router. The server establishes a Telnet, or other appropriate IP session to transfer the directions and pager information to the paging service. Use of a dedicated connection avoids the delays inherent in Internet based systems and is advantageous for sending directions through very busy or heavily utilized paging services. If the server 12 is established by the paging service itself and is sufficiently proximate to the paging service's server, a LAN or some other local connection is established to send the directions to the paging network.

In an alternate embodiment, the server 30 connects to the paging service 28 using a dial-up phone line. A modem is connected to the server 30 and a second modem is connected to the paging system 28 such that a dial-up connection is established to transmit data using vendor specific protocol at rates varying between, for example, 2.8 and 28.8 Kbps/sec. In this way, the HTML code containing the requested directions and the user's PIN number can be transmitted as required in step 216 without the use of the IP protocol.

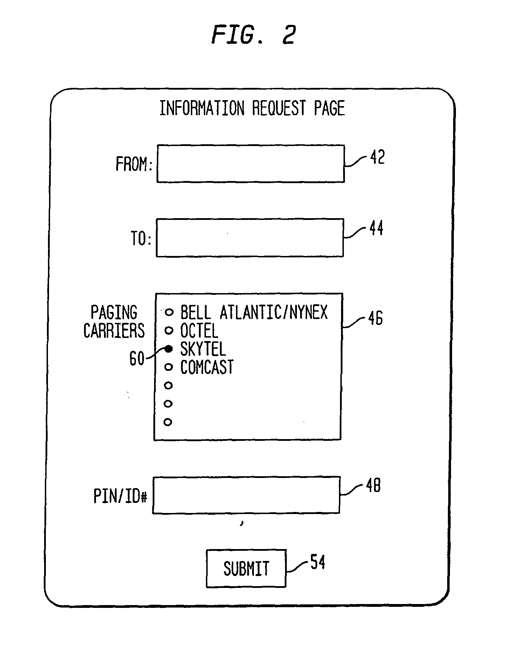

An information request page 40 is illustrated in Fig 2. The contents of the information request page 40 are preferably defined and implemented using an Internet programming language, such as hypertext markup language (HTML) or Java. The information request screen 40 instructs the call taker to enter the address of the starting destination in a first text-box 42 and the final destination's address in a second text-box 44. As will be described to a fuller extent below, these addresses are provided by the caller and can be entered in various forms such as specified by number and street or by intersection. In addition to requesting the starting and final destination, the information request page prompts the call taker to enter the user's pager information.

To reduce the likelihood of mistakes in the entered pager information, a table of at least the most common pager systems 46 is preferably provided and displayed utilizing a construct such as HTML radio-buttons as shown in the figure. A feature of the radio button construct is such that only one of the pager services can be selected. The call taker selects the radio-button corresponding to the designated pager service. By designing the information request screen 40 in this manner, the possibility of a call taker entering incorrect paging service information is significantly reduced.

In an alternate embodiment, the information request page accepts a service center descriptor rather than the destination address. For example, the information request screen instructs the user to enter a request for the nearest hotel, restaurant, gas station, etc., by clicking on a radio button corresponding to the desired service. In this way, a user can request directions to a business which provides a needed service without actually knowing the name or the location of that business.

The information request page 40 is also designed to accept the user's pager ID information, i.e. the user's pin or pager number. The format of this number is generally specific to each paging service. Preferably, the information request screen 40 is programmed such that the user's selection of pager service (via the radio-button selection) determines the format of the text box into which the call taker enters the user's pin number. Advanced Internet programming languages, such as Java, allow this kind of interactive relation between data entering constructs and further allow text-boxes to be pre-formatted. One example of a pre-formatted text box is one in which dashes '-' are inserted in preselected positions in the text-box before the data is entered. Another example of a preformatted text box is one wherein only a predetermined number of characters can be entered or where only certain characters can be entered in certain positions.

For example, and with reference to Fig. 2, in response to a user's request, a call taker clicks on the radio button corresponding to the Sky-Tel paging service 60 When this button 60 is selected, code associated with the information request page 40 is used to display a pre-formatted text-box 48 for accepting an appropriate pin number which corresponds to the Sky-Tel system format. After the call taker has entered all necessary information, the information request page 40 is submitted, for example, via a 'submit' button 54. The information is subsequently returned to the server 12 via the Internet connection 32.

In an alternate embodiment, the user's paging information is identified by use of a prearranged identification or PIN number. The PIN number is used by the server to access associated paging information which has been previously provided by the user Use of an identification number increases the efficiency of the system because it allows the call taker to receive and process more requests in a given period of time and it also relieves the user of having to remember multiple pieces of information.

In a further alternate embodiment, the user's PCS digital phone number is used as the PIN number. Many PCS digital phone systems are capable of providing caller I.D. to the called party. PCS digital phones also have a short message service whereby short pages are displayed on an LCD screen built into the PCS phone. The server 30 is therefore programmed to automatically associate the calling party by the phone number of the calling party and stores this number as the identification of the information device to which the directions will be sent once they are retrieved.

As mentioned above, in an alternate embodiment, the call taking system can be automated using voice recognition or DTMF tones. In a voice recognition system, an automated voice response system answers user's calls placed to a call center. Preferably, call center systems such as Lucent Technologies Inc.'s DEFINITY ECS call center system with CONVERSANT software is used. The voice response system prompts the user for the necessary information and translates the voice responses into text format for processing by the server. Alternately, the voice response system can prompt the user to select starting and final destinations from a selection of well known geographic markers by pressing the applicable number on the user's cellular phone pad (e.g. "Press 1 for the Empire State Building, press 2 for Carnegie Hall.")

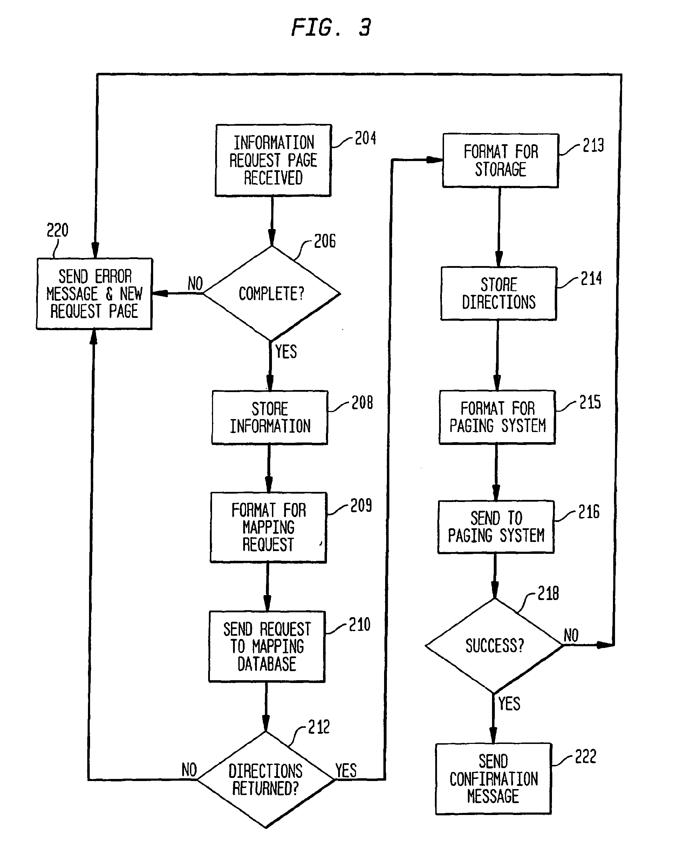

The operation of the server 12 upon receiving the submitted information will now be discussed with reference to the flowchart of Fig. 3. Initially, the server waits to receive a request for information in the form of a submitted information request page Once the request is received (step 204), the server 12 scans the data for completeness (step 206). For example, the server 12 will affirm that both a starting and a destination address have been entered and that complete user pager access information has been entered. If any of this information is missing or incomplete, the server 12 returns an error message to the call taker along with a new information request page (step 220)

If the submitted information entered is complete, the server 12 temporarily stores the information (step 208). The starting and final destination addresses are then formatted (step 209) and submitted to a mapping database program (step 210) In the preferred embodiment, the accessed mapping database is an Internet-based mapping service 38, such as MAP'S ON US accessible at http://www.MapsOnUs switchboard.com." Internet-based mapping services generally accept starting and final destination locations in various formats, such as "number and street" or intersection (e.g. 3rd Ave. & 50th Street), and often the entire address need not be given. For example, the zip code can often be excluded and postal abbreviations may be used Therefore, the information in the direction query may likewise use such abbreviated descriptors and only a minimal amount of formatting may be required prior to transmitting the starting and final destinations to the mapping service 38. In some instances, no formatting will be required and step 209 can be omitted.

Where an Internet mapping services accepts a service center descriptor in lieu of the destination address, a user can request the nearest hotel, restaurant, gas station, etc., as the desired destination. The mapping service correlates the starting address to the nearest requested service center and returns the name and address of the nearest requested business to the user in addition to the directions between the starting address and the nearest business. Where the request page requests a business descriptor instead of a destination address, the server, in step 208 through 210, stores, formats and sends the request in conformance with the mapping service's 38 format for accepting the descriptors.

The server 12 queries the web based mapping database 38 using an HTTP call to emulate access by an online user. This type of emulation is preferably accomplished by transmitting codes which, to the Internet mapping service 38, appears identical to the codes transmitted by an online user's browser. Such HTTP emulation is preferably accomplished using application development tools as Microsoft Visual Basic 6 0's Visual Basic Web Class Designer.

If the mapping service 38 is unable to return directions based on the starting and final address, the mapping service 38 will return an error message to the server 12 via the Internet connection 15. Upon detecting the error message (step 212), the server 12 preferably passes a blank information request page 40 to the call taker along with the received error message and instructs the call taker to enter more specific or complete start and end addresses (step 220).

If the Internet-based mapping service 38 successfully produces and delivers a set of directions to the server 12, the server 12 removes any extraneous information, such as HTML formatting codes, etc., to extract the directions (step 213.) The directions are then stored in the server's 12 random access memory in an area associated with the original data provided by the user (i.e., name of paging service and pin number, etc.) (step 214). By storing the data in a relational manner, the server is able to attend to other requests from other call takers before sending the present set of directions to the user's pager. This allows the server to compensate for delays which can be encountered when, for example, a particular paging service is temporarily unable to service a request to send a paging message.

In an alternate embodiment, rather than remotely accessing a third-party mapping database, the server can access a mapping database that resides locally on the server 12. In such an embodiment, the server is preferably programmed to access the database directly through SQL calls such as SELECT. Advantageously, there is no need to emulating a user interface in HTML code since queries for directions are made directly to the database.

It is within the scope of the invention to use this system with other information appliances, such as graphical paging devices. In a further alternate embodiment, the system provides graphical map data to the user on a graphic-enabled paging device (provided that a graphical representation of driving directions is supplied by the mapping system 38). Accordingly, in furtherance of the this embodiment, when the Internet mapping server 38 returns the HTML web page containing the requested directions in graphic and text format, and if the user's paging system supports graphical pages, the server 12 strips the HTML code and the text directions, leaving only the graphical map representation of the driving directions. The server sends this graphical data to the paging system 28. Of course, both text and graphics can be sent if desired.

In a still further embodiment, information other than directions may be requested and forwarded to the user's pager 22. For example, a user of the system may desire to receive show times for movies at various local movie theaters. In such a system, the server prompts the call taker to select options on behalf of the user such as the name of the desired theater(s) and the movie selection. In response to the user's choices, the server 12 accesses the appropriate database or Internet service in a manner similar to the direction system discussed above, and sends the information on theater show times to the user's pager 22 as described above.

Returning to the process represented in Fig. 3, in preparation for sending the direction's to the user's paging system, the server formats the delivery request using an emulation appropriate for the selected Internet based paging service (step 215). The server 12 then sends the directions to the Internet server of the paging system 30 in the appropriate format, such as emulated HTML code (step 216). The content of the HTML code is dependent upon the format of the respective paging service's paging request screen. The user's PIN or paging number is also sent to the Internet based paging server 30. After receiving the user's pin number and the text based directions, the paging server 30 uploads the text based directions to the paging service's wireless network 20 which, in turn, transmits these directions to the user's pager 22. If the paging service is unable to deliver the directions (step 218), an error message is preferably returned to the server 12 which then informs the call taker of the problem by passing an error message and explanation of the problem back to the call taker (step 220). The call taker can then inform the user of the problem. The system can also retry the page request until it is successful. If the paging system successfully delivers the directions, the server 12 sends a confirmation message to the call taker (step 222.)

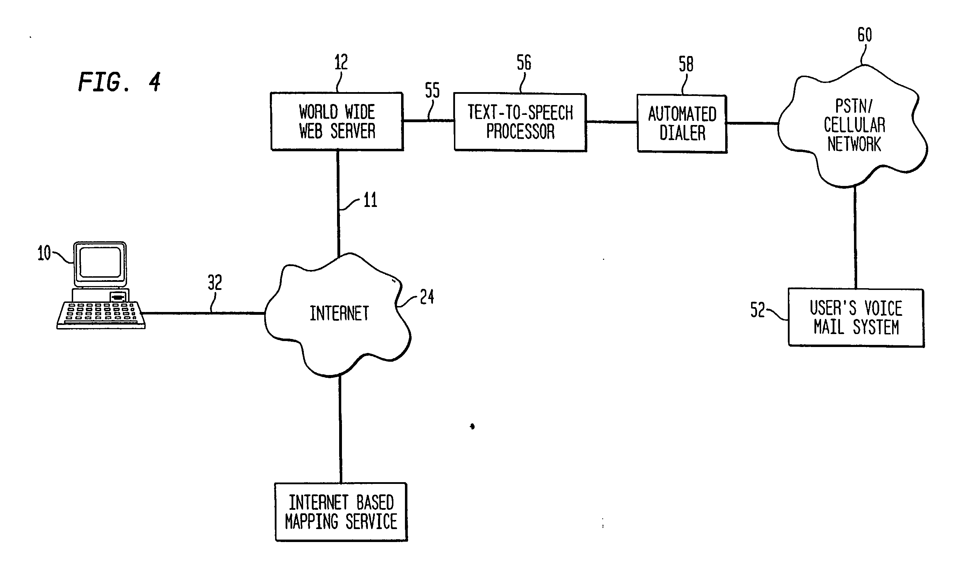

In yet another alternate embodiment of the present invention, illustrated in Figure 4, rather than sending the text based directions to a user's paging system, the server 12 processes the directions with a text-to-speech processor 56, the output of which is downloaded into a user's voice mailbox. Again, Lucent Technologies, Inc.'s DEFINITY ECS call center system and CONVERSANT software is preferably used. Instead of accessing a paging service, however, the server uses a telephone dialer 58 to correct to the user's voice mail system 52. (It is understood that in this embodiment, instead of requesting the user's paging service and pin number, the information request page 40 prompts the call taker for the a telephone number corresponding to the user's voice mail system 52 instead of pager information.) Upon successful connection with the user's voice mail system, the server 12 outputs the generated speech, whereby the audio directions are sent to and stored by the user's voice mail system 52 for reference by the user at a later time.

Although preferred embodiments have been disclosed for illustrative purposes, those skilled in the art will appreciate that many additions, modifications and substitutions are possible without departing from the scope of the invention as defined by the accompanying claims.

## Claims

1. A method for communicating with a voice mailbox comprising the steps of:
receiving an information request (204) and voice mailbox identification information, in the form of a telephone number corresponding to the user's voice mail system, from a wireless portable unit;
accessing (210) an informational database with said information request;
receiving (212) from the informational database, text format information in response to said information request;
processing (213) said text format information with a text-to-voice processor to generate an audio representation of said text format information; and
transmitting (216) said audio representation to a voice mailbox identified by said voice mailbox identification information, wherein the voice mailbox is remote from the wireless portable unit.

2. The method of claim 1 wherein:
the step of receiving an information request comprises:
receiving a voice call from a person desiring travel directions; and
having a call taker manually enter first information into a computer program based upon verbal communications from the person calling; and wherein:
the step of accessing the informational database uses at least a portion of the first information.

3. The method of claim 1 wherein:
the step of receiving an information request comprises:
receiving first voice information from a person desiring travel directions; and
converting the first voice information into first text information using a voice-to-text processor; and wherein:
the step of accessing the informational database uses at least a portion of the first text information.

4. The method of claim 1, wherein said information request comprises a plurality of geographic addresses and said text format information comprises driving directions between said addresses.

5. The method of claim 4, wherein said informational database is a mapping database providing driving directions in response to a query containing a geographic starting and ending point.

6. The method of claim 4, wherein said text format information comprises driving directions.

7. The method of claim 1, wherein said informational database is Internet-based and is accessed remotely through HTTP emulation.

8. The method of claim 1, further comprising the steps of:
recording said audio representation in the voice mailbox; and
calling the voice mailbox using the wireless portable unit to retrieve the recorded audio representation.

9. The method according to claim 2, wherein the first information includes a destination address and a unique identification associated with the person calling or the wireless portable device.

10. The method according to claim 2, wherein said step of accessing the informational database occurs over the internet.

11. The method according to claim 2, wherein said step of accessing the informational database occurs over a dedicated data line.

12. The method according to claim 3, wherein the first information includes the telephone number associated with the person's voice mailbox.

13. The method according to claim 3, wherein the first information includes a destination address and a unique identification associated with the person calling or the wireless portable device.

14. The method according to claim 3, wherein the first text information includes a plurality of geographic addresses and the second text information comprises driving directions between the addresses.

15. The method according to claim 3, wherein the informational database is a mapping database and said responsive information includes driving directions.

16. The method according to claim 3, wherein said step of accessing the informational database occurs over the internet.

17. A system for communicating with a voice mailbox comprising:
a call center (100) accepting an information request and voice mailbox identification information, in the form of a telephone number corresponding to the user's voice mail system, from a wireless portable unit;
an interface for transmitting the information request to an informational database (38) and for receiving responsive information back from the informational database;
a text-to-voice processor (56) receiving said responsive information in a text format and providing responsive information in a voice format; and
a transmitter (20) for providing said responsive information in the voice format to a voice mailbox identified by said voice mailbox identification information, wherein the voice mailbox is remote from the wireless portable unit.

18. The system according to claim 17 further comprising:
a telephone to receive a voice call from a person desiring travel directions;
a data processing device for allowing a call taker operating the telephone to manually enter first information based upon verbal communications from the person calling; and
a computer program for receiving the first information;
wherein the transmitter is controlled by the computer program, to send the information request to the informational database using at least a portion of the first information and to receive the responsive information from the informational database.

19. The system according to claim 17 further comprising:
a telephone answering device to receive a voice call from a person desiring travel directions;
a voice-to-text processor to convert first voice information, stated by the person desiring travel directions, into first text information;
a computer program for receiving the first text information;
wherein the transmitter is controlled by the computer program, to send the information request to the informational database using at least a portion of the first text information and to receive the responsive information from the informational database.

20. The system of claim 17, wherein said interface comprises a computer server.

21. The system of claim 20, wherein said call center comprises computer terminals networked to said computer server.

22. The system of claim 21, wherein said computer server is Internet-based and is configured to be accessed remotely by said computer terminals.

23. The system according to claim 18, wherein said interface is connected to the internet in order to transmit data to, and receive data from, the informational database.

24. The system according to claim 19, wherein the first voice information includes a destination address and a unique identification associated with the person calling or the wireless portable device.

25. The system according to claim 19, wherein the first text information includes a plurality of geographic addresses and the second text information comprises driving directions between the addresses.

26. The system according to claim 19, wherein said interface is connected to the Internet in order to transmit data to, and receive data from, the informational database.

27. The system of claim 17, wherein the wireless portable unit is a cellular phone.

## Patentansprüche

1. Verfahren zum Kommunizieren mit einer Voice-Mailbox, das die folgenden Schritte umfasst:
Empfangen einer Informationsanfrage (204) und von Voice-Mailbox-Identifikationsinformationen in der Form einer Telefonnummer, die dem Anrufbeantwortungssystem des Benutzers entspricht, von einer kabellosen tragbaren Einheit,
Zugreifen (210) auf eine Informationsdatenbank mit der genannten Informationsanfrage,
Empfangen (212) von Informationen im Textformat von der Informationsdatenbank als Antwort auf die genannte Informationsanfrage,
Verarbeiten (213) der genannten Informationen im Textformat mit einem Sprachsyntheseprozessor zum Erzeugen einer Audiodarstellung der genannten Informationen im Textformat und
Senden (216) der genannten Audiodarstellung an eine Voice-Mailbox, die durch die genannten Voice-Mailbox-Identifikationsinformationen **gekennzeichnet** ist, wobei die Voice-Mailbox sich von der drahtlosen tragbaren Einheit entfernt befindet.

2. Verfahren nach Anspruch 1, bei dem:
der Schritt des Empfangens einer Informationsanfrage Folgendes beinhaltet:
Empfangen eines Sprachrufs von einer Person, die eine Wegbeschreibung wünscht, und
Eingeben von ersten Informationen von Hand in ein Computerprogramm durch eine den Ruf entgegennehmende Person auf der Basis von mündlichen Mitteilungen von der anrufenden Person, und wobei
der Schritt des Zugreifens auf die Informationsdatenbank wenigstens einen Teil der ersten Informationen verwendet.

3. Verfahren nach Anspruch 1, bei dem:
der Schritt des Empfangens einer Informationsanfrage Folgendes beinhaltet:
Empfangen erster Sprachinformationen von einer Person, die eine Wegbeschreibung wünscht, und
Umwandeln der ersten Sprachinformationen in erste Textinformationen mithilfe eines Sprachsyntheseprozessors, und wobei:
der Schritt des Zugreifens auf die Informationsdatenbank wenigstens einen Teil der ersten Textinformationen verwendet.

4. Verfahren nach Anspruch 1, bei dem die genannte Informationsanfrage eine Vielzahl von geografischen Adressen umfasst und die genannten Informationen im Textformat (eine) Fahrwegbeschreibung(en) zwischen den genannten Adressen umfassen.

5. Verfahren nach Anspruch 4, bei dem die genannte Informationsdatenbank eine kartografische Datenbank ist, die als Antwort auf eine Anfrage, die einen geografischen Anfangs- und Endpunkt enthält, eine Fahrwegbeschreibung bereitstellt.

6. Verfahren nach Anspruch 4, bei dem die genannten Informationen im Textformat eine Fahrwegbeschreibung beinhalten.

7. Verfahren nach Anspruch 1, bei dem die genannte Informationsdatenbank internetbasiert ist und der Zugriff auf sie per Fernzugriff durch http-Emulation erfolgt.

8. Verfahren nach Anspruch 1, das ferner die folgenden Schritte beinhaltet:
Aufzeichnen der genannten Audiodarstellung in der Voice-Mailbox und
Anrufen der Voice-Mailbox unter Verwendung der drahtlosen tragbaren Einheit zum Abrufen der aufgezeichneten Audiodarstellung.

9. Verfahren nach Anspruch 2, bei dem die ersten Informationen eine Zieladresse und eine eindeutige Kennung umfassen, die der anrufenden Person oder dem drahtlosen tragbaren Gerät zugeordnet ist.

10. Verfahren nach Anspruch 2, bei dem der genannte Schritt des Zugreifens auf die Informationsdatenbank über das Internet erfolgt.

11. Verfahren nach Anspruch 2, bei dem der genannte Schritt des Zugreifens auf die Informationsdatenbank über eine dedizierte Datenleitung erfolgt.

12. Verfahren nach Anspruch 3, bei dem die ersten Informationen die der Voice-Mailbox der Person zugeordnete Telefonnummer umfassen.

13. Verfahren nach Anspruch 3, bei dem die ersten Informationen eine Zieladresse und eine eindeutige Kennung umfassen, die der anrufenden Person oder dem drahtlosen tragbaren Gerät zugeordnet sind.

14. Verfahren nach Anspruch 3, bei dem die ersten Textinformationen eine Vielzahl von geografischen Adressen umfassen und die zweiten Textinformationen Fahrwegbeschreibungen zwischen den Adressen beinhalten.

15. Verfahren nach Anspruch 3, bei dem die Informationsdatenbank eine kartografische Datenbank ist und die genannten Antwortinformationen (eine) Fahrwegbeschreibung(en) umfassen.

16. Verfahren nach Anspruch 3, bei dem der genannte Schritt des Zugreifens auf die Informationsdatenbank über das Internet erfolgt.

17. System zur Kommunikation mit einer Voice-Mailbox, das Folgendes beinhaltet:
ein Call-Center (100), das eine Informationsanfrage und Voice-Mailbox-Identifikationsinformationen in der Form einer Telefonnummer, die dem Voice-Mailbox-System des Benutzers entspricht, von einer drahtlosen tragbaren Einheit annimmt,
eine Schnittstelle zum Senden der Informationsanfrage an eine Informationsdatenbank (38) und zum Empfangen von Rückantwortinformationen aus der Informationsdatenbank,
einen Sprachsyntheseprozessor (56), der die genannten Antwortinformationen in einem Textformat empfängt und Antwortinformationen in einem Sprachformat bereitstellt, und
einen Sender (20) zum Geben der genannten Antwortinformationen in dem Sprachformat an eine Voice-Mailbox, die durch die genannten Voice-Mailbox-Identifikationsinformationen **gekennzeichnet** ist, wobei die Voice-Mailbox von der drahtlosen tragbaren Einheit entfernt ist.

18. System nach Anspruch 17, das ferner Folgendes aufweist:
ein Telefon zum Empfangen eines Sprachrufs von einer Person, die eine Wegbeschreibung wünscht,
ein Datenverarbeitungsgerät, mit dem eine den Ruf entgegennehmende Person, die das Telefon bedient, erste Informationen auf der Basis mündlicher Mitteilungen von der anrufenden Person von Hand eingeben kann, und
ein Computerprogramm zum Empfangen der ersten Informationen,
wobei der Sender von dem Computerprogramm gesteuert wird, um die Informationsanfrage unter Verwendung von wenigstens einem Teil der ersten Informationen an die Informationsdatenbank zu senden und die Antwortinformationen aus der Informationsdatenbank zu empfangen.

19. System nach Anspruch 17, das ferner Folgendes beinhaltet:
einen Telefonanrufbeantworter zum Empfangen eines Sprachrufs von einer Person, die eine Wegbeschreibung wünscht,
einen Sprachsyntheseprozessor zum Umwandeln erster Sprachinformationen, die von der eine Wegbeschreibung wünschenden Person angegeben werden, in erste Textinformationen,
ein Computerprogramm zum Empfangen der ersten Textinformationen,
wobei der Sender von dem Computerprogramm gesteuert wird, um die Informationsanfrage unter Verwendung von wenigstens einem Teil der ersten Textinformationen an die Informationsdatenbank zu senden und die Antwortinformationen aus der Informationsdatenbank zu empfangen.

20. System nach Anspruch 17, bei dem die genannte Schnittstelle einen Computerserver beinhaltet.

21. System nach Anspruch 20, bei dem das genannte Call-Center mit dem genannten Computerserver vernetzte Computerendgeräte beinhaltet.

22. System nach Anspruch 21, bei dem der genannte Computerserver internetbasiert ist und so konfiguriert ist, dass die genannten Computerendgeräte im Fernzugriff auf ihn zugreifen.

23. System nach Anspruch 18, bei dem die genannte Schnittstelle mit dem Internet verbunden ist, um Daten zu der Informationsdatenbank zu senden und Daten von ihr zu empfangen.

24. System nach Anspruch 19, bei dem die ersten Sprachinformationen eine Zieladresse und eine eindeutige Kennung, die der anrufenden Person oder dem drahtlosen tragbaren Gerät zugeordnet ist, umfassen.

25. System nach Anspruch 19, bei dem die ersten Textinformationen eine Vielzahl von geografischen Adressen umfassen und die zweiten Textinformationen (eine) Fahrwegbeschreibung(en) zwischen den Adressen umfassen.

26. System nach Anspruch 19, bei dem die genannte Schnittstelle mit dem Internet verbunden ist, um Daten zu der Informationsdatenbank zu senden und Daten von ihr zu empfangen.

27. System nach Anspruch 17, bei dem die drahtlose tragbare Einheit ein Mobiltelefon ist.

## Revendications

1. Méthode de communication avec une boîte aux lettres pour messagerie vocale comportant les étapes qui consistent:
à recevoir, à partir d'un appareil portable sans fil, une demande d'information (204) ainsi que l'identification de la boîte aux lettres pour messagerie vocale, sous forme de numéro de téléphone qui correspond au système de messagerie vocale de l'utilisateur;
à accéder (210) à une base de données d'information avec ladit demande d'information;
à recevoir (212) de la base de données d'information des informations en format texte en réponse a cette demande d'information;
à traiter (213) ces informations en format texte au moyen d'un processeur texte /information vocale afin de produire une représentation vocale de ces informations en format texte; et
à transmettre (216) cette représentation vocale vers une boîte aux lettres pour messagerie vocale identifiée par l'identification de la boîte aux lettres pour messagerie vocale, dans lequel la boîte aux lettres pour messagerie vocale est éloignée de l'appareil portable sans fil.

2. Méthode selon la revendication 1, dans lequel :
l'étape comportant la réception d'une demande d'information consiste:
à recevoir un appel vocal d'une personne désireuse de se voir fournir des instructions de voyage; et
à ce qu'une personne recevant l'appel introduise manuellement une première information dans un programme informatique en fonction du contenu des communications vocales de la personne qui appelle; et dans lequel :
l'étape qui consiste à accéder à la base de données d'information se sert au moins d'une partie de la première information.

3. Méthode selon la revendication 1, dans lequel :
l'étape comportant la réception d'une demande d'information consiste:
à recevoir une première information vocale d'une personne désireuse de se voir fournir des instructions de voyage; et
à convertir la première information vocale en première information-texte au moyen d'un processeur information vocale / texte; et dans lequel :
l'étape qui consiste à accéder à la base de données d'information se sert au moins d'une partie de la première information-texte.

4. Méthode selon la revendication 1, dans lequel la demande d'information comporte une pluralité d'adresses géographiques, et en ce que l'information en format texte comprend des instructions pour la conduite entre ces adresses.

5. Méthode selon la revendication 4, dans lequel la base de données d'information est une base de données de mappage qui fournit des instructions de conduite en réponse à une demande d'information contenant un point de départ et un point d'arrivée géographiques.

6. Méthode selon la revendication 4, dans lequel l'information en format texte comprend des instructions pour la conduite.

7. Méthode selon la revendication 1, dans lequel la base de données d'information est basée sur l'internet et elle est accessible à distance par émulation HTTP.

8. Méthode selon la revendication 1, comportant par ailleurs les étapes qui consistent:
à enregistrer la représentation vocale dans la boîte aux lettres pour messagerie vocale; et
à appeler la boîte aux lettres pour messagerie vocale au moyen de l'appareil portable sans fil afin de récupérer la représentation vocale enregistrée.

9. Méthode selon la revendication 2, dans lequel la première information comprend une adresse de detination et une identification unique correspondant à la personne qui appelle ou à l'appareil portable sans fil.

10. Méthode selon la revendication 2, dans lequel l'étape qui consiste à accéder à la base de données d'information se déroule sur l'Internet.

11. Méthode selon la revendication 2, dans lequel l'étape qui consiste à accéder à la base de données d'information se déroule sur une ligne de données spécialisée.

12. Méthode selon la revendication 3, dans lequel la première information comprend le numéro de téléphone qui correspond à la boîte aux lettres pour messagerie vocale de la personne.

13. Méthode selon la revendication 3, dans lequel la première information comprend une adresse de destination et une identification unique correspondant à la personne qui appelle ou à l'appareil portable sans fil.

14. Méthode selon la revendication 3, dans lequel la première information-texte comprend une pluralité d'adresses géographiques et la deuxième information-texte comprend des instructions pour la conduite entre les adresses.

15. Méthode selon la revendication 3, dans lequel la base de données d'information est une base de données de mappage et en ce que l'information fournie en réponse comprend des instructions de conduite.

16. Méthode selon la revendication 3, dans lequel l'étape qui consiste à accéder à la base de données d'information se déroule sur l'Internet.

17. Système de communication avec une boîte aux lettres pour messagerie vocale comportant:
un centre d'appels (100) qui reçoit, à partir d'un appareil portable sans fil, une demande d'information ainsi que l'identification de la boîte aux lettres pour messagerie vocale, sous forme de numéro de téléphone qui correspond au système de messagerie vocale de l'utilisateur;
une interface servant à transmettre la demande d'information à une base de données d'information (38) et à recevoir de la base de données d'information des informations fournies en réponse;
un processeur texte / information vocale (56) servant à recevoir les informations fournies en réponse en format texte, et à présenter les informations fournies en réponse en format vocal; et
un transmetteur (20) servant à transmettre les informations fournies en réponse en format vocal à une boîte aux lettres pour messagerie vocale identifiée par l'identification de la boîte aux lettres pour messagerie vocale, dans lequel la boîte aux lettres pour messagerie vocale est éloignée de l'appareil portable sans fil.

18. Système selon la revendication 17, comportant par ailleurs:
un téléphone servant à recevoir un appel vocal d'une personne désireuse de se voir fournir des instructions de voyage;
un appareil de traitement de l'information permettant à une personne recevant l'appel d'introduire manuellement la première information en fonction du contenu des communications vocales de la personne qui appelle; et
un programme informatique servant à recevoir la première information;
dans lequel le transmetteur est contrôlé par le programme informatique de manière à transmettre la demande d'information à la base de données d'information en utilisant au moins une partie de la première information, de manière aussi à recevoir l'information fournie en réponse par la base de données d'information.

19. Système selon la revendication 17, comportant par ailleurs:
un répondeur téléphonique servant à recevoir un appel vocal d'une personne désireuse de se voir fournir des instructions de voyage;
un processeur information vocale / texte servant à convertir la première information vocale, fournie par la personne désireuse de se voir fournir des instructions de voyage, en première information-texte;
un programme informatique servant à recevoir la première information-texte;
dans lequel le transmetteur est contrôlé par le programme informatique de manière à transmettre la demande d'information à la base de données d'information en utilisant au moins une partie de la première information-texte, de manière aussi à recevoir l'information fournie en réponse par la base de données d'information.

20. Système selon la revendication 17, dans lequel l'interface comprend un serveur qui est un ordinateur.

21. Système selon la revendication 20, dans lequel le centre d'appels comprend des terminaux connectés en réseau au serveur qui est un ordinateur.

22. Système selon la revendication 21, dans lequel le serveur qui est un ordinateur est basé sur l'Internet, et il est configuré de manière à être accessible à distance par les terminaux.

23. Système selon la revendication 18, dans lequel l'interface est connectée à l'Internet de manière à transmettre des données à la base de données d'information et à recevoir des données provenant de cette base de données.

24. Système selon la revendication 19, dans lequel la première information vocale comprend une adresse de destination et une identification unique correspondant à la personne qui appelle ou à l'appareil portable sans fil.

25. Système selon la revendication 19, dans lequel la première information vocale comprend une pluralité d'adresses géographiques et en ce que la deuxième information-texte comprend des instructions pour la conduite entre ces adresses.

26. Système selon la revendication 19, dans lequel l'interface est connectée à l'Internet de manière à transmettre des données à la base de données d'information et recevoir des données provenant de cette base de données.

27. Système selon la revendication 17, dans lequel l'appareil portable sans fil est un téléphone cellulaire.
